Europäisches Patentamt

**European Patent Office**

Office européen des brevets

(11) Veröffentlichungsnummer: **0 054 240**

**A2**

(12) **EUROPÄISCHE PATENTANMELDUNG**

(21) Anmeldenummer: **81110237.5**

(22) Anmeldetag: **08.12.81**

(51) Int. Cl.³: **H 04 M 1/62**
**H 04 M 11/02**

(30) Priorität: **16.12.80 DE 3047356**

(43) Veröffentlichungstag der Anmeldung:
**23.06.82 Patentblatt 82/25**

(84) Benannte Vertragsstaaten:
**AT BE CH DE FR GB LI LU NL SE**

(71) Anmelder: **Neumann Elektronik GmbH**
**Bülowstrasse 104 - 110**
**D-4330 Mülheim 1(DE)**

(72) Erfinder: **Neumann, Dirk, Dipl.-Ing.**
**Schemelsbruch 11**
**D-4330 Mülheim 1(DE)**

(74) Vertreter: **Feder, Heinz, Dr. et al,**
**Dominikanerstrasse 37 Postfach 11 04 26**
**D-4000 Düsseldorf 11(DE)**

(54) **Zur Aufstellung im Freien geeignetes elektrisches Gerät, insbesondere Sprechstelle für eine Wechsel-, Gegen- oder Lautsprechanlage.**

(57) Ein zur Aufstellung im Freien geeignetes elektrisches Gerät, insbesondere eine Sprechstelle für eine Wechsel-, Gegen- oder Lautsprechanlage. Sie besitzt ein an einer Seite offenes Gehäuse (1), das durch einen abnehmbaren, die Frontplatte des Gerätes enthaltenden Deckel (2) verschließbar ist. In dem Gehäuse (1) sind elektronische Vorrichtungen (5) sowie optische und/oder akustische Signale abgebende Vorrichtungen (6, 8, 9) und Schaltvorrichtungen (7) auf einer fest mit dem Gehäuse (1) verbundenen Leiterplatte (4) angeordnet. In der Frontplatte (3) sind Öffnungen (3a, 3b, 3c) zum Durchlaß optischer bzw. akustischer Signale und/ oder Öffnungen (3d) zur Aufnahme mechanischer Bedienungselemente (11) vorgesehen, wobei vor den Öffnungen (3c) zum Durchlaß optischer Signale bis unmittelbar vor optische Signale abgebende oder aufnehmende Vorrichtungen (6) reichende Lichtleiter (13) angeordnet sind und an mit der Frontplatte (3) verbundenen mechanischen Bedienungselementen (11) in den Innenraum des Gehäuses (1) zu Schaltvorrichtungen (7) reichende Betätigungselemente (12) angeordnet sind.

Fig. 1

Zur Aufstellung im Freien geeignetes
elektrisches Gerät, insbesondere Sprechstelle für eine Wechsel-, Gegen- oder
Lautsprechanlage.

Gegenstand der Erfindung ist ein zur Aufstellung im
Freien geeignetes elektrisches Gerät, insbesondere
eine Sprechstelle für eine Wechsel-, Gegen- oder Lautsprechanlage, mit einem an einer Seite offenen, durch
einen abnehmbaren die Frontplatte enthaltenden Deckel
verschließbaren Gehäuse, in dem elektronische Vorrichtungen sowie optische und/oder akustische Signale
abgebende oder aufnehmende elektrische Vorrichtungen
und/oder elektrische Schaltvorrichtungen auf einer
fest mit dem Gehäuse verbundenen Leiterplatte angeordnet sind und in das ein Anschlußkabel hineinführbar
und an ein fest im Gehäuse angeordnetes Anschlußorgan
anschließbar ist und bei dem die Frontplatte Öffnungen
zum Durchlaß optischer und/oder akustischer Signale
oder zur Aufnahme mechanischer, von außen zugänglicher
Bedienungselemente zur Betätigung von im Gehäuse angeordneten, elektrischen Schaltvorrichtungen aufweist.

Bei bekannten Geräten dieser Art, insbesondere bei
Sprechstellen, Lautsprechern oder optischen Signalgeräten, sind sowohl die elektronischen Vorrichtungen,
also beispielsweise Verstärker, als auch die optischen
und/oder akustische Signale abgebenden und aufnehmenden Vorrichtungen, also beispielsweise Signalleuchten, Lautsprecher und Mikrofone, fest an der Frontplatte angeordnet, die damit gleichzeitig als Trägerplatte für alle Einbauteile dient (s. z.B. DE-GMS 1 915 956).

Da der elektrische Anschluß des Gerätes über ein in das feste Gehäuse hineingeführtes und dort mit einer Anschlußvorrichtung verbundenes Kabel erfolgt, ist es notwendig, an der Frontplatte mindestens eine, im allgemeinen mehrpolige Steckverbindung anzuordnen, über welche der elektrische Anschluß der an der Frontplatte befestigten Vorrichtungen erfolgt. Durch diese Ausbildung wird die Montage derartiger Geräte beträchlich erschwert, was sich insbesondere bei späteren Servicetätigkeiten an den meist im Freien angeordneten Geräten sehr störend bemerkbar macht. Das Abnehmen und vor allem das Wiederansetzen der Frontplatte ist umständlich wegen der mehrpoligen Steckverbindungen. Die Steckverbindungen selbst erweisen sich oft als störanfällig und der Herstellungsaufwand der Geräte ist beträchtlich, zumal oft besondere Führungsmaßnahmen vorgesehen werden müssen, damit ein sicheres Ansetzen der Frontplatte mit den Steckverbindungen möglich ist.

Es ist auch schon versucht worden, die Schwierigkeit in der Führung beim Ansetzen der Frontplatte auf das Gehäuse dadurch zu beheben, daß die Steckverbindungen nicht fest mit dem Gehäuse einerseits und der Frontplatte andererseits verbunden sind, sondern die Verbindung über ein bewegbares Kabelstück erfolgt, an dessen Ende ein Teil der Steckverbindung angeordnet ist.

- 3 -

Aber auch diese Ausführungen haben sich als aufwendig und schlecht zu montieren erwiesen.

Schließlich ist eine Sprechstelle bekannt, bei der die Verstärkereinheiten fest im Gehäuse angeordnet sind, während Lautsprecher, Mikrofon, Schaltvorrichtungen und Signalleuchten weiterhin fest an der Frontplatte angeordnet sind. Auch bei dieser bekannten Sprechstelle erfolgt die Verbindung zwischen den an der Frontplatte und den im Gehäuse angeordneten Vorrichtungen über mehrpolige Steckverbindungen. Die Sprechstelle weist also auch die oben angegebenen Nachteile auf.

Es ist auch eine Phasen-Anschnittsteuerung aus elektronischen Bauteilen bekannt, bei der die elektronischen Bauteile auf einer Leiterplatte angeordnet und diese auf einer Grundplatte montiert ist, die durch eine Schutzkappe gegen äußere Berührung abgedeckt ist (DE-GMS 69 28 126).

Die der Erfindung zugrunde liegende Aufgabe bestand darin, ein elektrisches Gerät der eingangs erwähnten Bauart zu schaffen, ohne Verwendung mehrpoliger Steckverbindungen zwischen Deckel und Gehäuse, das einfach und preiswert herstellbar ist, bei dem die Montage, insbesondere das Ab- und Ansetzen der Frontplatte bei Servicearbeiten, bequem und sicher durchführbar ist, und bei dem die im Gerät angeordneten Vorrichtungen, insbesondere auch der Kabelanschluß, leicht zugänglich sind.

- 4 -

Die Lösung dieser Aufgabe erfolgt erfindungsgemäß dadurch, daß die elektronischen Vorrichtungen sowie optische und/oder akustische Signale abgebende Vorrichtungen und Schaltvorrichtungen auf der Leiterplatte angeordnet sind, in der Frontplatte Öffnungen zum Durchlaß optischer bzw. akustischer Signale vorgesehen sind, wobei vor den Öffnungen zum Durchlaß optischer Signale bis unmittelbar vor optische Signale abgebende oder aufnehmende Vorrichtungen reichende Lichtleiter angeordnet sind und an mit der Frontplatte verbundenen mechanischen Bedienungselementen in den Innenraum des Gehäuses jeweils bis zu einer der elektrischen Schaltvorrichtungen reichende mechanische Betätigungselemente angeordnet sind.

Der Aufbau des Gerätes läßt sich durch die erfindungsgemäßen Merkmale stark vereinfachen. Gemäß verschiedenen in den Unteransprüchen näher gekennzeichneten Ausführungsformen des erfindungsgemäßen Gerätes ist es möglich, entweder alle elektrischen Vorrichtungen mit Ausnahme der Vorrichtungen, welche akustische Signale abgeben oder aufnehmen, also bei Sprechstellen etwa der Lautsprecher und Mikrofone, auf der Leiterplatte im Gehäuse anzuordnen. (Patentansprüche 2 und 3). Eine lösbare elektrische Verbindung braucht dann lediglich noch zwischen diesen restlichen an der Frontplatte angeordneten Vorrichtungen und den auf der Leiterplatte angeordneten Vorrichtungen vorgesehen zu sein. Diese elektrische Verbindung kann aber, wie weiter unten näher beschrieben, sehr einfach und wenig störanfällig ausgebildet sein.

Eine weitere Vereinfachung des Gerätes kann auch dadurch erreicht werden, daß an der Frontplatte lediglich ein elektroakustischer Wandler angeordnet ist, der sowohl als Lautsprecher als auch als Mikrofon wirksam ist. Es ist aber auch möglich (Patentansprüche 4 und 5) sämtliche elektrischen Vorrichtungen, also auch die akustische Signale aufnehmenden oder abgebenden Vorrichtungen auf der Leiterplatte im Gehäuse anzuordnen, so daß an der Frontplatte überhaupt keine elektrischen Vorrichtungen mehr angeordnet sind. Die Frontplatte kann dann in besonders einfacher und bequemer Weise abgenommen und wieder angesetzt werden, beispielsweise wie der Deckel eines Lichtschalters oder einer Steckdose. Unter der Frontplatte liegen dann bequem zugänglich sämtliche innerhalb des Gerätes angeordneten, elektrischen Vorrichtungen.

Das erfindungsgemäße Gerät läßt sich in besonders vorteilhafter Weise bei wettersicheren Sprechstellen für Wechsel-, Gegen- oder Lautsprechanlagen verwenden. Es wird aber darauf hingewiesen, daß die Erfindung keineswegs auf derartige Anlagen beschränkt ist. Auch bei anderen, zur Aufstellung im Freien gedachten elektrischen Geräten, war es bisher üblich, einen Teil der elektrischen Bauelemente am Deckel bzw. der Frontplatte anzuordnen. Es treten dann auch bei diesen Geräten die oben erwähnten Nachteile auf, die durch den Gegenstand der Erfindung behoben werden können (s.Patentansprüche 7 bis 9).

Das optische Signalgerät (s. Patentanspruch 8) kann beispielsweise als Warngerät, z.B. mit einer Blink-oder Blitzleuchte versehen, ausgebildet sein. Es kann aber auch als Signalgerät, beispielsweise im Verkehrswesen, mit Glühlampen hinter farbigen Sichtfeldern oder auch mit LCD- oder LED-Anzeigen ausgebildet sein.

Eine wichtige Ausführungsform (s. Patentanspruch 9) ist vor allem als Zusatzgerät gedacht, das im wesentlichen elektrische Schaltvorrichtungen und optische Signalvorrichtungen enthält. Dieses Zusatzgerät kann als Zusatzgerät zu einer Sprechstelle dienen, ist aber auch nicht auf diesen Anwendungsbereich beschränkt.

Ausführungsbeispiele für elektrische Geräte gemäß der Erfindung werden im folgenden anhand der beigefügten Zeichnungen näher erläutert.

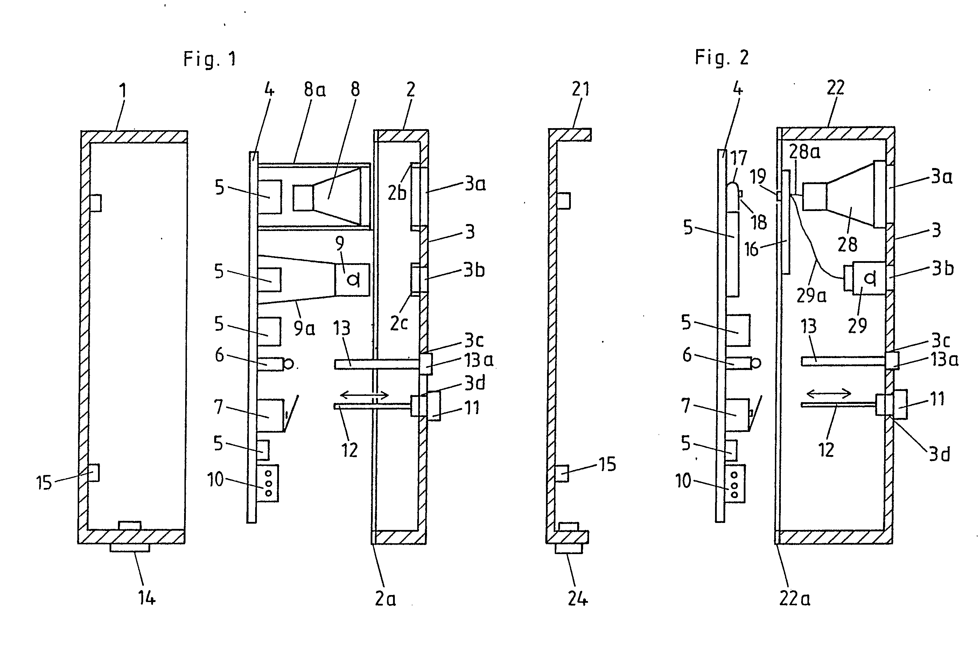

In den Zeichnungen zeigen die Fig. 1 und 2 zwei Ausführungsformen einer Sprechstelle für eine Wechsel-, Gegen- oder Lautsprechanlage in geschnittener, explodierter Darstellung;

die Fig. 3, 4, 5a, 5b, 5c und 6 Einzelheiten an den Ausführungsformen nach den Fig. 1 bzw. 2;

die Fig. 7 bis 9 drei weitere Ausführungsformen vom Gerät nach der Erfindung in einer teilweise geschnittenen Darstellung im zusammengesetzten Zustand.

In Fig. 1 ist eine Sprechstelle dargestellt, die als Außensprechstelle für eine Wechsel-, Gegen- oder Lautsprechanlage dienen kann. Die einzelnen innerhalb einer derartigen Sprechstelle angeordneten Vorrichtungen sind bekannt und in Fig. 1 nur teilweise schematisch angedeutet. Die Sprechstelle weist ein Gehäuse 1 auf, das in nicht dargestellter Weise an einer Gebäudewand oder einem eigenen Ständer fest angeordnet sein kann. In das Gehäuse ist eine Leiterplatte 4 eingesetzt und über Abstandsstücke 15 fest mit der Gehäuserückwand verbunden. Das Gehäuse wird an seiner Vorderseite durch einen aufsetzbaren Deckel 2 verschlossen, der die Frontplatte 3 enthält, die mit verschiedenen Öffnungen 3a, 3b, 3c, 3d versehen ist. Zwischen Deckel 2 und Gehäuse 1 ist eine umlaufende Dichtung 2a angeordnet.

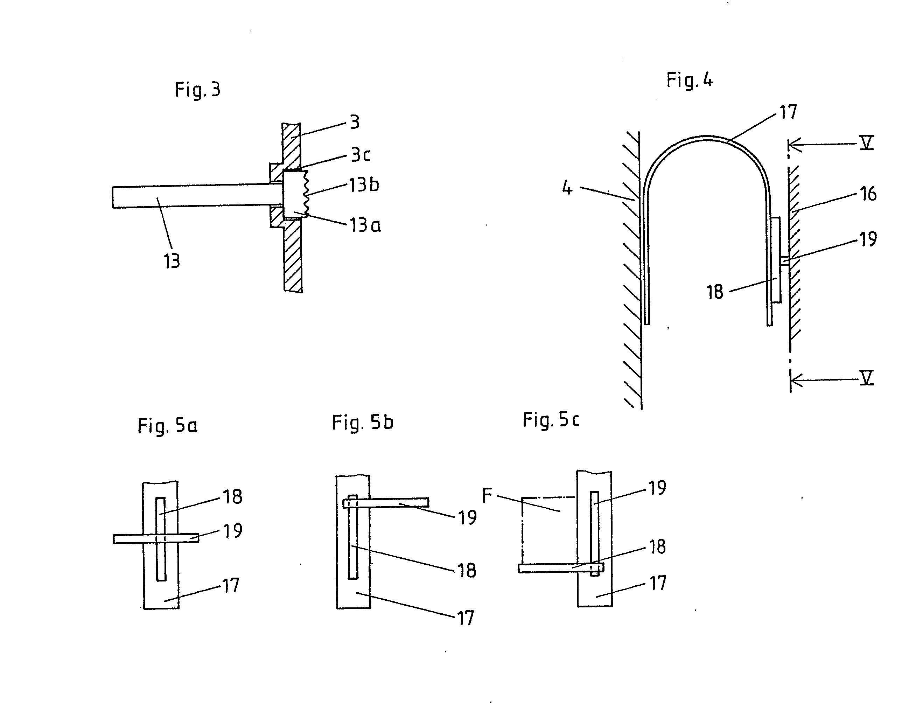

Auf der Leiterplatte 4 sind elektronische Vorrichtungen 5, also beispielsweise Verstärker angeordnet, sowie Signalleuchten 6 und elektrische Schaltvorrichtungen 7. Weiterhin sind auf der Leiterplatte 4 über eine Halterung 8a ein Lautsprecher 8 und über eine Halterung 9a ein Mikrofon 9 befestigt. Schließlich ist auf der Leiterplatte 4 noch eine Anschlußvorrichtung 10 zum Anschluß des durch die am Gehäuse 1 angeordnete Kabeldurchführung 14 eingeführten Anschlußkabels angeordnet. An der Frontplatte 3 dienen die Öffnungen 3a und 3b zum Durchlaß akustischer Signale, die vom Lautsprecher 8 kommen, bzw. dem Mikrofon 9 zugeführt werden. Die Öffnungen 3a und 3b sind von Dichtungen 2b und 2c umgeben, an welche sich im zusammengesetzten Zustand des Gerätes an der Vorderseite des Lautsprechers 8 und des Mikrofons 9 angeordnete Dichtungsflächen fest anlegen, so daß an dieser Stelle der Eintritt von Feuchtigkeit verhindert wird, wodurch die Sprechstelle wettersicher wird. In die Öffnung 3c ist ein Lichtleiter 13 eingesetzt, dessen Länge so bemessen ist, daß er im zusammengesetzten Zustand des Gerätes dicht vor der Signalleuchte 6 endet. An seinem vorderen, in die Frontplatte 3 eingesetzten Ende weist der Lichtleiter 13 einen verbreiterten Kopf 13a auf, der über die Außenfläche der Frontplatte hinausragt. Es kann zweckmäßig sein, die Außenfläche des Kopfes 13a des Lichtleiters so auszubilden, wie dies beispielsweise in Fig. 3 dargestellt ist. Hier weist der Lichtleiterkopf 13a an seiner Außenseite eine Riffelung 13b auf. Durch diese Riffelung wird eine diffuse Lichtabstrahlung erreicht, so daß das durch den Lichtleiter 13 austretende Licht auch bei seitlicher Beobachtung zu erkennen ist. In die Öffnung 3d ist ein Bedienungselement 11, beispielsweise eine Drucktaste, eingesetzt. An dem nach innen ragenden Teil dieses Bedienungselementes 11 ist ein Betätigungselement, beispielsweise ein Stößel 12, angeordnet, dessen Länge so bemessen ist, daß sein inneres Ende im zusammengesetzten Zustand des Gerätes dicht vor der Schaltvorrichtung 7 endet. Bei Betätigung des Bedienungselementes 11 bewegt sich der Stößel in der durch den Doppelpfeil angedeuteten Richtung.

Es zeigt sich, daß im zusammengesetzten Zustand des Gerätes die Schallein- und austrittsöffnungen der Vorrichtungen 8 und 9 direkt hinter den entsprechenden Durchtrittslöchern der Frontplatte liegen, und daß weiterhin die von der Signalleuchte 6 ausgehenden Lichtsignale durch den mit der Frontplatte 3 verbundenen Lichtleiter 13 nach außen geleitet werden, während die Betätigung der Schaltvorrichtung 7 vom Bedienungselement 11 über das Betätigungselement 12 durchführbar ist.

Bei einer Demontage des Gerätes kann der Deckel 2 mit der Frontplatte 3 leicht abgenommen werden. Da sich an der Frontplatte 3 keinerlei elektrische Vorrichtungen befinden, ist auch keine elektrische Verbindung, etwa eine Steckverbindung, zwischen Deckel 2 und Gehäuse 1 erforderlich.

Der Einfachheit halber sind in Fig. 1 jeweils nur eine Signalleuchte 6 und eine Schaltvorrichtung 7 angegeben. Selbstverständlich können diese Vorrichtungen auch in mehrfacher Ausführung auf der Leiterplatte 4 angeordnet sein.

In Fig. 2 ist eine Sprechstelle dargestellt, die sich von der Sprechstelle nach Fig. 1 im wesentlichen dadurch unterscheidet, daß Lautsprecher und Mikrofon noch an der Frontplatte fest angeordnet sind, während alle anderen elektrischen Vorrichtungen auf der mit dem Gehäuse fest verbundenen Leiterplatte angeordnet sind. Im folgenden tragen Bauteile, die mit den Bauteilen der Ausführungsform nach Fig. 1 übereinstimmen, auch die gleichen Bezugsziffern. Die Leiterplatte 4 ist über Abstandshalter 15 fest im Gehäuse 21 angeordnet. Auf der Leiterplatte 4 sind elektronische Bauteile 5, Signalleuchten 6 und Schaltvorrichtungen 7, sowie die Anschlußvorrichtung 10 für das durch die Kabeleinführung 24 geführte Kabel angeordnet. An dem die Frontplatte 3 tragenden Deckel 22 sind ein Lautsprecher 28 vor der Frontplattenöffnung 3a, sowie ein Mikrofon 29 vor der Frontplattenöffnung 3b angeordnet. Lautsprecher 28 und Mikrofon 29 sind über Leitungen 28a bzw. 29a mit einem Kontakt 19 verbunden; der an einer mit dem Deckel 22 fest verbundenen Platte 16 angeordnet ist. Auf der Leiterplatte 4 ist ein federnder Kontaktbügel 17 angeordnet, der an seinem der Frontplatte 3 zugewandten Ende einen Kontakt 18 trägt. Die Kontakte 18 und 19 sind in der aus den Fig. 4 sowie Fig. 5a bis 5c ersichtlichen Weise ausgebildet. Die Kontakte 18 und 19 besitzen beide eine Länge, die um ein Vielfaches größer ist als ihre Breite. Der Kontakt 18 ist, wie aus Fig. 4 ersichtlich, in Längsrichtung an der Oberseite des federnden Kontaktbügels 17 angeordnet. Der an der Platte 16 angeordnete Kontakt 19 besitzt im wesentlichen die gleichen Abmessungen wie der Kontakt 18, er ist jedoch um einen Winkel von 90° verdreht gegen den Kontakt 18 angeordnet. In Fig. 5a ist die Normalstellung der beiden Kontakte 18 und 19 gegeneinander dargestellt. Tritt aufgrund von Fertigungstoleranzen oder Verbiegungen des Kontaktbügels 17, beispielsweise bei der Montage, eine Verschiebung der beiden Kontakte 18 und 19 gegeneinander auf, so ist diese Verschiebung für einen guten Kontakt unschädlich, solange sie gewisse vorgegebene Grenzen nicht überschreitet. In den Fig. 5b und 5c sind die beiden Extremstellungen dargestellt, in denen noch Kontakt stattfindet. Die zulässigen Verschiebungen der beiden Kontakte 18 und 19 gegeneinander sind solange für die Kontaktgabe unschädlich, wie sie den in Fig. 5c mit F bezeichneten Flächenbereich nicht verlassen. Durch diese Art der Kontaktausbildung und Anordnung wird erreicht, daß bei dieser Ausführungsform ein großer Toleranzbereich bezüglich der beiden Kontakte 18 und 19 erreicht wird, was zur Folge hat, daß sich das Aufsetzen des Deckels 22 auf das Gehäuse 21 als ziemlich einfach und unkritisch erweist. Die Ausbildung dieser Kontakte läßt sich zudem mit sehr einfachen Mitteln, d.h. preisgünstig, erreichen.

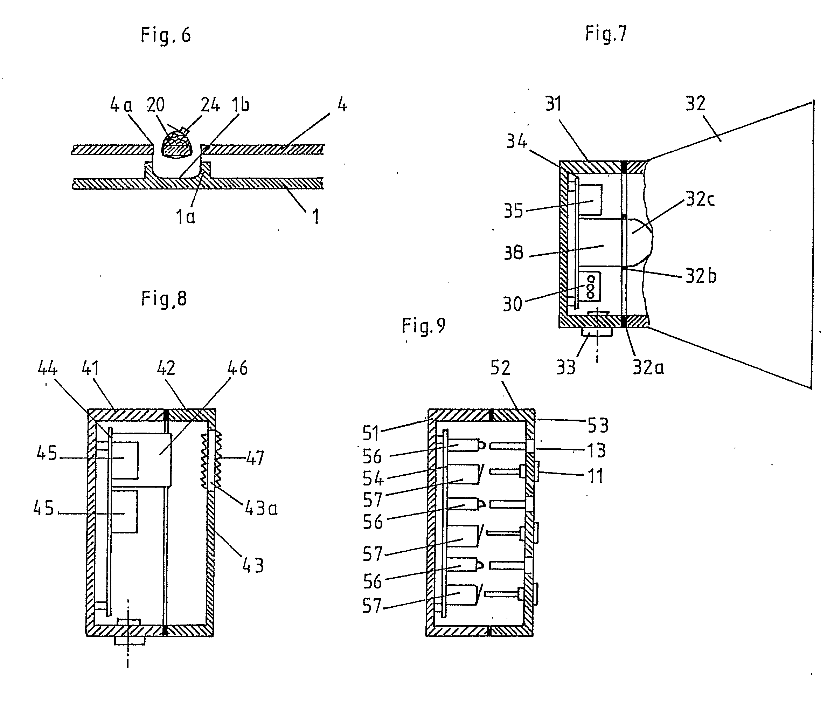

In besonderer Weise kann bei den Ausführungsformen nach Fig. 1 und 2 auch die Verlegung von Kabeladern auf der Leiterplatte 4 gelöst werden. Hierzu sind in der Leiterplatte 4, wie in Fig. 6 dargestellt, jeweils nebeneinanderliegende Paare von Bo-hrungen 4a vorgesehen, zwischen denen die Kabeladern 20 entlanggeführt werden und durch eine durch die Bohrungen 4a geführte Schlingbandbefestigung 24 fixiert werden. Um die Kabel auch bei bereits in das Gehäuse 1 bzw. 21 eingesetzter Leiterplatte 4 festlegen zu können, sind an der Innenseite der Rückwand des Gehäuses 1 Ansätze 1a vorgesehen, welche zur Leiterplatte 4 hin gekrümmte Führungsflächen 1b aufweisen. Die Führungsflächen sind so angeordnet, daß ein durch eines der Löcher 4a eingeführtes Schlingband 24 beim Hindurchschieben durch das andere Loch wieder hinausgeführt wird. Diese Art der Kabelfixierung hat sich als wenig kostenaufwendig erwiesen. Die Kabeladern können auch bei Servicetätigkeiten sehr leicht, ohne Abschrauben der Leiterplatte 4, gelöst und wieder befestigt werden.

In Fig. 7 ist eine Ausführungsform eines Gerätes dargestellt, die nicht als Sprechstelle, sondern als Lautsprecher ausgebildet ist. Im Gehäuse 31 ist eine Leiterplatte 34 angeordnet, auf welcher elektronische Vorrichtungen 35 angeordnet sind, sowie eine Anschlußvorrichtung 30 zum Anschluß des durch die Kabeleinführung 33 eingeführten Anschlußkabels. Weiterhin ist auf der Leiterplatte 34 ein elektroakustischer Wandler 38 angeordnet, dessen Schallaustrittsöffnung nach außen weist.

Der Deckel 32 des Gehäuses ist als Schalltrichter eines Lautsprechers ausgebildet, in dem in nicht eigens dargestellter und an sich bekannter Weise Schallführungen angeordnet sein können. Der Deckel 32 ist auf das Gehäuse 31 über Dichtungen 32a aufgesetzt, wobei die Schalleintrittsöffnung 32c des Schalltrichters genau gegenüber der Schallaustrittsöffnung des elektroakustischen Wandlers 38 liegt, wobei um diese beiden Öffnungen eine weitere Dichtung 32b angeordnet ist. Auf diese Weise wird ein wettersicherer Lautsprecher erhalten, bei dem nach Abnahme des Schalltrichters alle elektrischen Vorrichtungen im Gehäuse 31 zugänglich sind.

Fig. 8 zeigt ein Ausführungsbeispiel eines Gerätes, das als optisches Signalgerät dienen kann. Im Gehäuse 41 ist eine Leiterplatte 44 angeordnet, auf der sich elektronische Vorrichtungen 45 befinden, sowie eine Blink- oder Blitzleuchte 46. In dem die Frontplatte 43 tragenden Deckel 42 ist eine Öffnung vorgesehen, die mit einem Sichtfeld 47 aus durchsichtigem oder durchscheinendem Material versehen ist. Dieses Sichtfeld kann an seiner äußeren und/oder inneren Oberfläche mit einer Riffelung versehen sein. Es kann an dieser Stelle aber auch ein anderes optisches Übertragungsglied, beispielsweise eine Fresnel-Linse angeordnet sein. Selbstverständlich kann bei dieser Ausführungsform außer einer Blink- oder Blitzleuchte auch noch ein akustischer Signalgeber in analoger Weise einge-

- 13 .-

baut sein. Auch bei dieser Vorrichtung liegen nach Abnahme des Deckels 42 alle elektrischen Vorrichtungen zugänglich im Gehäuse 41 auf der Leiterplatte 44.

Eine nicht dargestellte Variante der Ausführungsform nach Fig. 8 kann darin bestehen, daß anstelle einer Blink- oder Blitzleuchte 46 ein oder mehrere Glühlampen angeordnet sind, und die Felder 47 aus durchsichtigem oder durchscheinendem Material eingefärbt sind, wodurch beispielsweise eine Kleinampel für Verkehrszwecke erhalten werden kann. Schließlich sind auch Ausführungen möglich, bei denen im Inneren LED- oder LCD-Anzeigen angeordnet sind.

In Fig. 9 ist eine Ausführungsform eines Gerätes dargestellt, das ebenfalls keine Sprechstelle ist, das aber beispielsweise als Zusatzgerät für eine Sprechstelle dienen kann. Im Gehäuse 51 ist eine Leiterplatte 54 angeordnet, auf der in diesem Fall einerseits Schaltvorrichtungen 57 und andererseits Signalleuchten 56 angeordnet sind. An dem die Frontplatte 53 tragenden Deckel 52 sind analog der bereits beschriebenen Ausführungsform nach Fig. 1 und 2 Lichtleiter 13 sowie mit Betätigungselementen 12 versehene Bedienungselemente 11, also etwa Drucktasten, vorgesehen.

Das in Fig. 9 dargestellte Gerät kann beispielsweise als Zusatzgerät unterhalb einer Sprechstelle nach den Fig. 1 oder 2 angeordnet sein. Es kann aber auch als selbständiges Befehlsgerät, beispielsweise auch bei Starkstrom-Anlagen, ausgebildet sein.

Patentansprüche:

1. Zur Aufstellung im Freien geeignetes elektrisches Gerät, insbesondere Sprechstelle für eine Wechsel-, Gegen- oder Lautsprechanlage, mit einem an einer Seite offenen, durch einen abnehmbaren, die Frontplatte enthaltenden Deckel verschließbaren Gehäuse, in dem elektronische Vorrichtungen sowie optische und/oder akustische Signale abgebende oder aufnehmende elektrische Vorrichtungen und/oder elektrische Schaltvorrichtungen auf einer fest mit dem Gehäuse verbundenen Leiterplatte angeordnet sind und in das ein Anschlußkabel hineinführbar und an ein fest im Gehäuse angeordnetes Anschlußorgan anschließbar ist und bei dem die Frontplatte Öffnungen zum Durchlaß optischer und/oder akustischer Signale oder zur Aufnahme mechanischer, von außen zugänglicher Bedienungselemente zur Betätigung von im Gehäuse angeordneten elektrischen Schaltvorrichtungen aufweist, dadurch gekennzeichnet, daß die elektronischen Vorrichtungen (5, 35, 45) sowie optische und/oder akustische Signale abgebende Vorrichtungen (6, 46, 56; 8, 9, 38) und Schaltvorrichtungen (7, 57) auf der Leiterplatte (4, 34, 44, 54) angeordnet sind, in der Frontplatte 3, 43, 53) Öffnungen (3a, 3b, 3c, 32c) zum Durchlaß optischer bzw. akustischer Signale vorgesehen sind, wobei vor den Öffnungen (3c, 43a) zum Durchlaß optischer
Signale bis unmittelbar vor optische Signale
abgebende oder aufnehmende Vorrichtungen (6, 56)
reichende Lichtleiter (13) angeordnet sind und
an mit der Frontplatte (3, 53) verbundenen
mechanischen Bedienungselementen (11) in den
Innenraum des Gehäuses jeweils bis zu einer der
elektrischen Schaltvorrichtungen (7, 57) reichende
mechanische Betätigungselemente (12) angeordnet sind.

2. Elektrisches Gerät nach Anspruch 1, dadurch gekennzeichnet, daß in an sich bekannter Weise akustische
Signale abgebende und/oder aufnehmende Vorrichtungen
(28, 29) fest an der Innenseite der Frontplatte (3)
angeordnet sind, wobei zur elektrischen Verbindung
dieser Vorrichtungen mit den fest im Gehäuse (21)
angeordneten Vorrichtungen federnde Kontaktstücke (17, 18) dienen, die an der Leiterplatte (4)
oder an einer mit der Frontplatte (3) verbundenen
Vorrichtung (16) angeordnet sind und mit entsprechenden festen Gegenkontakten (19) zusammenwirken.

3. Elektrisches Gerät nach Anspruch 2, dadurch gekennzeichnet, daß die federnden Kontaktstücke als an der
Leiterplatte (4) angeordnete Kontaktbügel (17)
ausgebildet sind, die an ihrem der Frontplatte (3)
zugewandten Ende jeweils einen Kontakt (18) aufweisen, dessen Kontaktfläche eine Länge besitzt, die
erheblich größer ist als ihre Breite und die Kontaktfläche des Gegenkontaktes (19) analog ausgebildet
ist und die beiden Kontaktflächen um 90° gegeneinander verdreht angeordnet sind.

4. Elektrisches Gerät nach Anspruch 1, dadurch gekennzeichnet, daß die akustische Signale abgebenden und/oder aufnehmenden Vorrichtungen (8, 9, 38) auf der fest mit dem Gehäuse (1, 31) verbundenen Leiterplatte (4, 34) so angeordnet sind, daß ihre Schallaustritts bzw. -eintrittsöffnungen an der Innenseite der Frontplatte (3) unmittelbar vor den Öffnungen (3a, 3b) zum Durchlaß akustischer Signale liegen.

5. Elektrisches Gerät nach Anspruch 4, dadurch gekennzeichnet, daß die Öffnungen (3a, 3b) zum Durchlaß akustischer Signale an der Innenseite der Frontplatte (3) von Dichtungen (2b, 2c, 32b) umgeben sind, an denen bei aufgesetzter Frontplatte entsprechende Dichtungsflächen der akustische Signale abgebenden oder aufnehmenden Vorrichtungen (8, 9, 38) anliegen.

6. Elektrisches Gerät nach einem der Ansprüche 1 bis 5, dadurch gekennzeichnet, daß die Lichtleiter (13) durch die Öffnungen (3c) zum Durchlaß optischer Signale nach außen hindurchgeführt sind und an ihrer Außenseite eine geriffelte Oberfläche (13b) zur diffusen Lichtabstrahlung aufweisen.

7. Elektrisches Gerät nach Anspruch 2, dadurch gekennzeichnet, daß es als Lautsprecher ausgebildet ist, wobei der gesamte Deckel (32) als Schalltrichter mit Schallführungen ausgebildet ist und auf der im Gehäuse angeordneten Leiterplatte (34) die elektronischen Vorrichtungen (35), die Anschlußvorrichtungen (30) sowie der elektroakustische

− 4 −

Wandler (38) angeordnet sind.

8. Elektrisches Gerät nach Anspruch 1, dadurch gekennzeichnet, daß es als optisches Signalgerät ausgebildet ist, wobei die Frontplatte (43) Sichtfelder (47) aus durchsichtigem oder durchscheinendem Material aufweist, hinter denen die mit der Leiterplatte (44) fest verbundenen Vorrichtungen (46) zur Abgabe optischer Signale angeordnet sind.

9. Elektrisches Gerät nach Anspruch 1, dadurch gekennzeichnet, daß es als lediglich mit elektrischen Schaltvorrichtungen (54) und optischen Signalvorrichtungen (56) versehenes Befehls- oder Zusatzgerät, insbesondere für Sprechstellen, ausgebildet ist.

Fig. 1

Fig. 2

1/3

0054240

Fig. 3

Fig. 4

Fig. 5a

Fig. 5b

Fig. 5c

2/3

0054240

Fig. 6

Fig.7

Fig.8

Fig.9

3/3

0054240